# EUROPEAN PATENT SPECIFICATION

(11) **EP 1 826 460 B1**
(45) Date of publication and mention of the grant of the patent: **08.04.2009**
(21) Application number: 07004192.6
(22) Date of filing: 28.02.2007
(51) Int. Cl.: F16H 55/34, F16H 15/38

(54) **Manufacturing method for an input disc, output disc and power roller of a toroidal continuously variable transmission**
Herstellverfahren für eine Eingangsscheibe, Ausgangsscheibe und Reibrolle eines stufenlos verstellbaren Toroidgetriebes
Procédé de fabrication d'un disque entré, d'un disque sorti et d'une roue à friction de transmission toroidal à variation continue

(30) Priority: 28.02.2006 JP 2006052856
(43) Date of publication of application: 29.08.2007
(73) Proprietor: JTEKT Corporation, Osaka-shi Osaka 542-8502 (JP)
(72) Inventor: Harada, Hisashi, Osaka-shi, Osaka 542-8502 (JP); Nishisaka, Hisato, Osaka-shi, Osaka 542-8502 (JP)
(74) Representative: Sajda, Wolf E.

(56) References cited:
- WO-A-20/06041184
- JP-A- 2004 218 715
- US-A1- 2003 013 574

## Description

### FIELD OF THE INVENTION

The present invention relates to a rolling/sliding member used for a transmission of an automobile or the like, a toroidal continuously variable transmission using this rolling/sliding member and a method of manufacturing the rolling/sliding member.

### DESCRIPTION OF THE PRIOR ART

A toroidal continuously variable transmission is provided with an input disk and an output disk each having a concave curved raceway surface to be a roller raceway surface on a side thereof and a roller which makes rolling/sliding contact with the raceway surfaces of both disks facing each other under a lubricated and highpressure condition. The toroidal continuously variable transmission can transmit torque between the disks by means of traction between each disk and the roller and can increase/decrease the number of revolutions (change gear ratio) of the output disk with respect to the input disk with smooth motion which is different from motion of a conventional transmission by adjusting the position at which the roller contacts each disk.

In the above described toroidal continuously variable transmission, rolling/sliding members which make rolling/sliding contact such as the input and output disks and roller make rolling/sliding contact with each other in a condition in which they are exposed to high temperature, high contact pressure and moreover shear stress which acts through traction during torque transmission, and they are therefore under extreme operating conditions. For this reason, high fatigue resistance is required so as to reduce the possibility of producing flaking caused by surface flaking and a structural variation with micro cracks or the like produced on the surface as starting points.
To meet such requirements, in manufacturing rolling/sliding members of a toroidal continuously variable transmission, there is a proposal of a technique as described in Japanese Patent Laid-Open No. 2004-218 715 for performing quenching/tempering processing on a raw material made of bearing steel, and then performing shot peening treatment and vanish processing to apply compression residual stress of the surface of the raw material to 600 to 1000 MPa.

In the above described conventional example, compression residual stress applied to the surface increases fatigue resistance and can thereby suppress surface originated flaking. This makes it possible to prevent early damage on the surface and acquire a high degree of durability.

The document US 2003-0013574 A1 discloses a toroidal continuously variable transmission. For extension of service lives of rollers and discs of a toroidal continuously variable transmission, input discs, output discs and rollers are formed of a heat-resisting bearing steel. At least a roller has its peripheral surface subjected to a shot peening treatment for achieving a compressive residual stress of 0.6 to 1.2 GPa and a hardness of HRC 63 to 66 at the outermost surface.

A further rolling/sliding member for such a toroidal continuously variable transmission is known from WO 2006/041184 A1 and uses a steel with similar components as in the present application.

Both of the indicated prior art documents are silent as to a specific content of retained austenite after a quenching/tempering step and before a surface hardening step by a shot peening treatment.

However, there is an increasing demand for a reduction of fuel consumption and downsizing of automobiles in recent years and there is also an increasing demand for a higher degree of durability of a transmission used for such automobiles to meet the demand for downsizing thereof.

### OBJECT AND SUMMARY OF THE INVENTION

It is an object of the present invention to provide a rolling/sliding member capable of achieving greater durability and a toroidal continuously variable transmission using this rolling/sliding member and a method of manufacturing the rolling/sliding member.

The object underlying the present invention is solved by a rolling/sliding member as defined in claim 1 and a method of manufacturing such a rolling/sliding member as defined in claim 3. An advantageous further development of the rolling/sliding member is defined in claim 2, whilst a toroidal continuously variable transmission making use of such a rolling/sliding member according to the invention is set forth in claim 4.

In order to attain the above described object, the inventors have made every effort to research in pursuit of development of a rolling/sliding member capable of realizing greater durability. In the process, the inventors have conducted various experiments and research focusing on a reduction of surface hardness resulting from heat generation tempering (heating) due to rolling/sliding contact, which is one of causes for surface cracks. As a result, the inventors have come up with the present invention by discovering that especially the contents of Si, Cr contained in the raw material of a rolling/sliding member and compression residual stress of the surface have a great influence on the reduction of surface hardness due to heating.

That is, the present invention provides a rolling/sliding member used for a toroidal continuously variable transmission, wherein the rolling/sliding member is made of steel containing at least:
C: not less than 0.8 wt% and not more than 1.5 wt%
Si: not less than 0.9 wt% and not more than 2.1 wt%
Cr: not less than 2 wt% and not more than 5 wt%,
wherein by applying surface hardening through shot peening treatment to a surface whose surface hardness is set to not less than 60 HRC and not more than 64 HRC through quenching/tempering, surface compression residual stress thereof is set to not less than 700 MPa and not more than 1100 MPa, whereby the surface hardening through shot peening causes the amount of reduction of surface hardness when heated at 300°C to be not more than 1 HRC.

According to the rolling/sliding member in the above described construction, steel containing the above described predetermined amounts of Si and Cr is used, quenching and tempering are performed to thereby set predetermined surface hardness and the above described surface compression residual stress is added, and it is thereby possible to set the amount of reduction of surface hardness when heated at 300 °C to not more than 1 HRC.
The temperature of the contact surface of the rolling/sliding member used for the toroidal continuously variable transmission is known to generally increase to approximately 200 to 300°C through rolling/sliding thereof. In contrast, even when the surface of the rolling/sliding member is heated, the reduction of surface hardness is suppressed to not more than 1 HRC, and therefore even when the surface of the rolling/sliding member is heated by heat generation accompanying rolling and sliding, it is possible to suppress the reduction of surface hardness. Therefore, it is possible to keep surface hardness necessary for the rolling/sliding member and suppress generation of surface cracks originating from the reduction of surface hardness. In addition to compression residual stress applied to the surface, it is possible to effectively enhance fatigue resistance of the rolling/sliding member and obtain higher durability.

According to the invention, the amount of retained austenite after quenching/tempering and before the surface hardening through shot peening treatment is preferably not less than 10 wt% and not more than 20 wt%.
When the amount of retained austenite exceeds 20 wt%, retained austenite is decomposed through heat generation accompanying rolling and sliding of the rolling/sliding member and surface flaking is more likely to occur as a consequence.
Since fatigue resistance to rolling and sliding generally improves by containing a certain amount of retained austenite in steel, it is possible to increase the fatigue resistance by setting the amount within the above described range without producing surface flaking or the like.

Furthermore, the above described rolling/sliding member preferably has an austenitizing temperature of not less than 870 °C and not more than 950 °C and an tempering temperature of not less than 200 °C and not more than 280 °C.
When the above described austenitizing temperature is lower than 870 °C, predetermined surface hardness may not be obtained. On the other hand, when the austenitizing temperature is higher than 950 °C, austenite crystal grains during quenching may become coarse and the strength of the rolling/sliding member after quenching and tempering may decrease.

Furthermore, the present invention provides a method of manufacturing a rolling/sliding member used for a toroidal continuously variable transmission, comprising a quenching/tempering process of performing quenching/tempering on an intermediate material of the rolling/sliding member made of steel containing at least:
C: not less than 0.8 wt% and not more than 1.5 wt%
Si: not less than 0.9 wt% and not more than 2.1 wt%
Cr: not less than 2 wt% and not more than 5 wt%,
at an austenitizing temperature of not less than 870 °C and not more than 950 °C and an tempering temperature of not less than 200 °C and not more than 280 °C to thereby set surface hardness of the intermediate material to not less than 60 HRC and not more than 64 HRC and the amount of retained austenite to not less than 10 wt% and not more than 20 wt% and a surface hardening process of applying surface hardening through shot peening treatment to the intermediate material which has undergone the quenching/tempering process, thereby setting surface compression residual stress of the intermediate material to not less than 700 MPa and not more than 1100 MPa and setting the amount of reduction of surface hardness to not more than 1 HRC when heated at 300 °C.

According to the method of manufacturing a rolling/sliding member in the above described construction, surface hardness is set to 60 HRC to 64 HRC and the amount of retained austenite is set to not less than 10 wt% and not more than 20 wt% by quenching and tempering an intermediate material made of steel with the above described predetermined contents of Si and Cr and this intermediate material is further subjected to surface hardening through shot peening treatment, and it is thereby possible to apply surface compression residual stress within a range of not less than 700 MPa and not more than 1100 MPa and set the amount of reduction of surface hardness when heated at 300 °C to not more than 1 HRC.
The rolling/sliding member manufactured in this way can keep surface hardness necessary for the rolling/sliding member even when the surface of the rolling/sliding member is heated by heat generation accompanying rolling and sliding and suppress generation of surface cracks caused by the reduction of surface hardness. In addition to compression residual stress applied to the surface, it is further possible to effectively enhance fatigue resistance of the rolling/sliding member.
That is, according to the above described method of manufacturing a rolling/sliding member, it is possible to effectively increase fatigue resistance and obtain a rolling/sliding member having higher durability.

Furthermore, the present invention provides a toroidal continuously variable transmission including an input disk having a concave curved raceway surface on a side, an output disk having a concave curved raceway surface facing the raceway surface of the input disk on a side and rollers which are sandwiched between raceway surfaces of the respective disks in a rotatable manner and transmit torque between the respective disks through rolling and sliding between the respective disks, wherein at least one of the input disk, output disk and rollers, which are rolling/sliding members, is a rolling/sliding member according to the invention as defined above.
According to the toroidal continuously variable transmission in the above described construction, since each of the above described disks and rollers is a rolling/sliding member according to the invention as defined above, it is possible to effectively increase fatigue resistance of these members and further enhance durability of the toroidal continuously variable transmission.

### BRIEF DESCRIPTION OF THE DRAWINGS

- FIG. 1: is a schematic diagram showing a variator part of a full toroidal continuously variable transmission which is a kind of a toroidal continuously variable transmission according to an embodiment of the present invention;
- FIG. 2: shows manufacturing processes of both disks and the roller;
- FIG. 3: is a schematic diagram of a durability tester used for a verification test; and
- FIG. 4: is a graph showing a relationship between the amount of Si and the amount of Cr contained in steel of products according to different examples and comparative examples.

### DESCRIPTION OF THE PREFERRED EMBODIMENTS

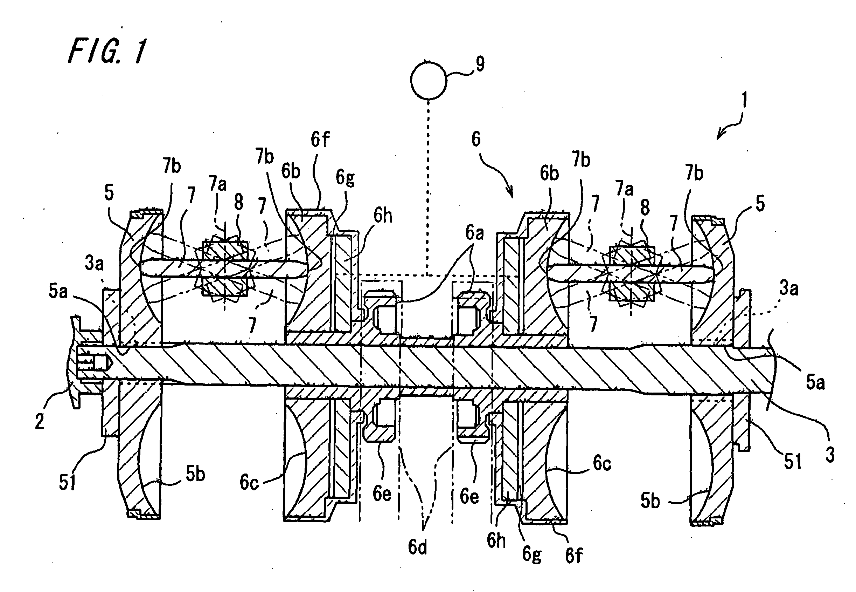

Next, a preferred embodiment of the present invention will be explained with reference to the attached drawings. FIG. 1 is a schematic diagram showing a variator part of a full toroidal continuously variable transmission which is a kind of a toroidal continuously variable transmission according to an embodiment of the present invention. This variator 1 is provided with an input shaft 3 which is driven to rotate by an output shaft 2 of an engine and input disks 5 are supported in the vicinity of both ends thereof.

A concave curved raceway surface 5b is formed in one side of each input disk 5 and a spline hole 5a with a plurality of grooves is formed in an inner circumference thereof. The input disk 5 is joined to the input shaft 3 in an integrally rotatable manner by coupling the spline hole 5a with a spline shaft 3a provided in the input shaft 3. Furthermore, the movement of the respective input disks 5 in a direction of moving away from each other is regulated by an engagement ring 51 fixed to the input shaft 3.

An output section 6 provided with output members 6a and output disks 6b which are supported by the output members 6a in an integrally rotatable manner is provided in the center of the input shaft 3 in the axial direction in a relatively rotatable manner with respect to the input shaft 3. A concave curved raceway surface 6c is formed in one side of the output disk 6b facing the raceway surface 5b of the input disk 5. Sprocket gears 6e which engage with a chain 6d are formed on the outer circumference of the output members 6a so that power is transmitted to the outside via the chain 6d.

The output disk 6b is joined to the output member 6a in such a manner that the output disk 6b is allowed to inch in the axial direction, a gap 6g is provided on the back thereof and a backup plate 6h is arranged. The gap 6g is sealed by a casing 6f and a seal (not shown) and supplying a hydraulic pressure to this gap 6g from a hydraulic power source 9 puts force on the output disk 6b in the direction of the opposing input disk 5 and applies a predetermined terminal load thereto.

The space between the raceway surface 5b of the input disk 5 and the raceway surface 6c of the output disk 6b facing each other is structured as a toroidal gap, this toroidal gap is supplied with a lubricant (traction oil) and three disk-shaped rollers 7 which rotate while making rolling/sliding contact with each raceway surface 5b, 6c via an oil film are arranged equiangularly on the circumference of a circle.
The parts that contact the raceway surfaces 5b and 6c are outer surfaces 7b of the roller 7. Each roller 7 is supported by a carriage 8 in a rotatable manner such that an axis of rotation 7a thereof can be tilted. A drive force by a hydraulic pressure is applied to the carriage 8 in a direction crossing the surface of the sheet in FIG. 1.

In the variator 1, when the pair of input disks 5 rotate, torque is transmitted from the input disks 5 to the output disks 6b via the three rollers 7 on the left and right sides by a shear force of the oil film. The rollers 7 supported by the carriage 8 tilt the axis of rotation 7a to cancel unbalance between a reaction force produced in the carriage 8 by transmitting the torque and the torque required to drive the output disk 6b. This causes the positions of the rollers 7 to change as shown by two-dot dashed lines in the figure and causes the change gear ratio between the both disks 5, 6b to change continuously.

In the full toroidal continuously variable transmission in the above described construction, the both disks 5, 6b and the rollers 7 are rolling/sliding members which make rolling/sliding contact with each other and the rolling/sliding member according to the present invention is applied thereto. These rolling/sliding members (both disks 5, 6b, rollers 7) are made of heat-resistant bearing steel.
This heat-resistant bearing steel is adjusted to a composition containing alloy elements within a range satisfying C: not less than 0.8 wt% and not more than 1.5 wt%, Si: not less than 0.9 wt% and not more than 2.1 wt%, Mn: not less than 0.05 wt% and not more than 0.5 wt%, Cr: not less than 2 wt% and not more than 5 wt%, and Mo: not less than 0.05 wt% and not more than 0.5 wt% with the remainder being Fe and unavoidable impurities.

In the above described heat-resistant bearing steel, when the content of C is less than 0.8 wt%, sufficient hardness may not be obtained after quenching. For this reason, the content of C needs to be not less than 0.8 wt%. On the other hand, when the content of C exceeds 1.5 wt%, toughness decreases and results in a decrease of strength, and therefore the content of C needs to be not more than 1.5 wt%.
Furthermore, the content of C of the above described heat-resistant bearing steel is preferably not less than 0.9 wt% in the above described range. Furthermore, the content of C is preferably not more than 1.1 wt% in the above described range.

Moreover, in the above described heat-resistant bearing steel, a predetermined amount of Si needs to be contained for the purpose of suppressing decrease of the value of hardness when heated to not less than 300 °C, increasing tempering softening resistance and thereby increasing high-temperature strength.
When the content of Si is less than 0.9 wt%, the stability of retained austenite becomes insufficient and heat-resistance of the material becomes insufficient, and therefore the content of Si needs to be not less than 0.9 wt%. Furthermore, when the content of Si exceeds 2.1 wt%, toughness decreases and results in a decrease of strength, and therefore the content of Si needs to be not more than 2.1 wt%.
Furthermore, the content of Si of the above described heat-resistant bearing steel is preferably not more than 1.7 wt% in the above described range.

In the above described heat-resistant bearing steel, Cr is an element which influences the formation of carbide and hardenability.
When the content of Cr is less than 2 wt%, the strength of the above described heat-resistant bearing steel decreases, and therefore the content of Cr needs to be not less than 2 wt%. When the content of Cr exceeds 5 wt%, workability decreases due to an influence of carbide, and therefore the content of Cr needs to be not more than 5 wt%.

In the above described heat-resistant bearing steel, since Mn improves hardenability of steel, secures sufficient hardness of steel and effectively acts on improvement of rolling fatigue life, the content of Mn needs to be not less than 0.05 wt%. Furthermore, when the content of Mn exceeds 0.5 wt%, machinability and toughness decrease, and therefore the content of Mn needs to be not more than 0.5 wt%.
Furthermore, the content of Mn in the above described heat-resistant bearing steel is preferably not less than 0.4 wt% in the above described range.

Mo is an element which improves the wear resistance through stabilization of residual carbide. The content of Mo being not less than 0.05 wt% increases hardenability, contributes to improvement of strength after quenching/tempering, improves wear resistance and rolling fatigue life through deposition of stable carbide, but since this operation and effect saturate at 0.5 wt%, the content of Mo is set to not more than 0.5 wt%.
Furthermore, the content of Mo in the above described heat-resistant bearing steel is preferably not less than 0.3 wt% in the above described range.

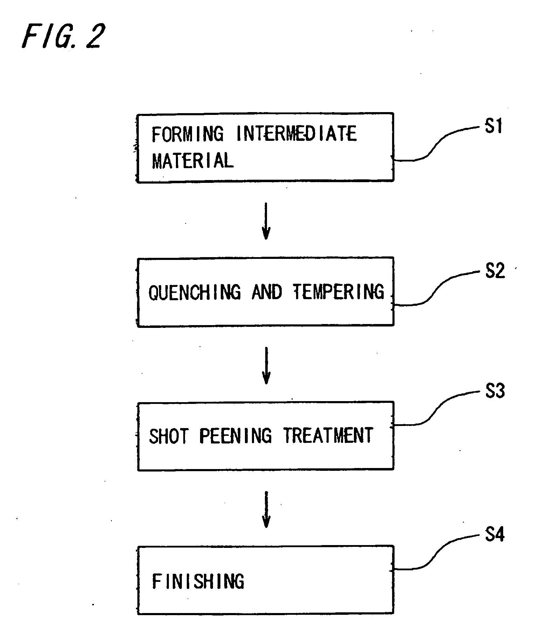

Next, a method of manufacturing the both disks 5, 6b, and the rollers 7 described above will be explained. FIG. 2 shows manufacturing processes of the both disks 5, 6b, and the rollers 7. In the figure, an intermediate material of the both disks 5, 6b, and the rollers 7 is formed out of a raw material made of the above described heat-resistant bearing steel through hot forging and cutting or the like (step S1).
The intermediate material formed in step S1 is subjected to quenching and tempering at an austenitizing temperature of not less than 870 °C and not more than 950 °C and at an tempering temperature of not less than 200 °C and not more than 280 °C quenching/tempering process, step S2). Through this quenching/tempering process, surface hardness of the intermediate material becomes not less than 60 HRC and not more than 64 HRC and the amount of retained austenite becomes not less than 10 wt% and not more than 20 wt%.
When the austenitizing temperature is lower than 870 °C, predetermined surface hardness may not be obtained. On the other hand, when it is higher than 950 °C, austenite crystal grains become rough during quenching and the strength of the rolling/sliding members after quenching and tempering may decrease. For this reason, the austenitizing temperature is preferably set to not less than 870 °C and not more than 950 °C.

Furthermore, the above described austenitizing temperature is preferably set to not more than 920 °C within the above described range. Setting the austenitizing temperature to not more than 920 °C can further reduce austenite crystal grains and thereby inhibit carbide from reducing and suppress the reduction of toughness and suppress the reduction of strength.

Next, the intermediate material which has undergone step S2 (quenching/tempering process) is subjected to surface hardening through machining such as shot peening treatment (step S3, surface hardening process). This surface hardening process causes surface compression residual stress of the intermediate material to be not less than 700 MPa and not more than 1100 MPa and causes the amount of reduction of hardness when heated at 300 °C to be not more than 1 HRC.
The intermediate material which has undergone the surface hardening process is subjected to predetermined finishing (step S4) and the both disks 5, 6b, and the rollers 7 can thereby be obtained as finished products.

The both disks 5, 6b, and the rollers 7 manufactured as shown above undergo the quenching/tempering process and the surface hardening process and surface hardness thereof is thereby set to not less than 60 HRC and not more than 64 HRC, the amount of retained austenite is set to not less than 10 wt% and not more than 20 wt%, surface compression residual stress thereof is set to not less than 700 MPa and not more than 1100 MPa by applying surface hardening to the surface through machining such as shot peening treatment and the amount of reduction of surface hardness when heated at 300°C can be set to not more than 1 HRC.

In this embodiment, the above described surface hardness and amount of retained austenite can be obtained by performing the above described quenching/tempering process on the heat-resistant bearing steel, but when surface hardness of the above described intermediate material is smaller than 60 HRC, the strength may fall short of the strength necessary for the rolling/sliding member, which increases the possibility that surface flaking may occur. Furthermore, when surface hardness of the raw material exceeds 64 HRC, toughness of the members decreases, which may cause the members to fracture or crack when used.
Furthermore, when the content of retained austenite in steel reaches a certain amount, fatigue resistance against rolling and sliding improves. However, when the amount of retained austenite is excessive, heat generated by rolling and sliding may cause retained austenite to decompose and increase the possibility that surface flaking may occur as a consequence, and therefore the amount of retained austenite is preferably set to not more than 20 wt% as described above.
Furthermore, in this embodiment, the heat-resistant bearing steel is subjected to the quenching/tempering process and compression residual stress is then applied through shot peening treatment, and this is attributable to the fact that machining (shot peening treatment) causes retained austenite to be transformed to martensite. For this reason, when the amount of retained austenite is too little, it is not possible to secure sufficient compression residual stress when subjected to machining, and therefore the amount of retained austenite is preferably set to not less than 10 wt%.
Furthermore, though compression residual stress of the surface of the rolling/sliding members after shot peening treatment is set to not less than 700 MPa and not more than 1100 MPa, when this compression residual stress is less than 700 MPa, fatigue resistance may fall short of the fatigue resistance necessary for the rolling/sliding members. On the other hand, when the compression residual stress is greater than 1100 MPa, excessive plastic deformation may occur on the surface of the intermediate material, making the rolling/sliding members brittle and this may cause surface flaking.

In this embodiment, the amount of reduction of surface hardness of the rolling/sliding member after shot peening treatment when heated at 300 °C is set to not more than 1 HRC, and when the amount of reduction of surface hardness is greater than 1 HRC, surface hardness of the rolling/sliding members decreases along with rolling and sliding, which may cause cracks on the surface.
This is because the temperature at the contact surface of a rolling/sliding member used for the toroidal continuously variable transmission is generally known to increase up to approximately 200 °C to 300 °C through rolling and sliding and the rolling/sliding member is always heated at around the above described temperature when the transmission is in operation. When heated at 200 °C to 300 °C in this way, the surface of the rolling/sliding member set to predetermined surface hardness in the quenching/tempering process is tempered, which may cause the surface hardness to decrease considerably.
That is, when the amount of reduction of surface hardness when heated at 300 °C is greater than 1 HRC, the reduction of surface hardness increases, the strength falls short of the strength necessary for the rolling/sliding member, which may produce cracks on the surface. On the other hand, as in the case of this embodiment, when the amount of reduction of surface hardness when heated at 300 °C is set to be smaller than 1 HRC, even when the surface is heated, it is possible to prevent the surface hardness from decreasing considerably.

The full toroidal continuously variable transmission according to this embodiment is intended to synergistically increase fatigue resistance effectively and further increase durability by defining the composition of steel used for the rolling/sliding members (both disks 5, 6b, and rollers 7), above described compression residual stress value, surface hardness and amount of reduction of surface hardness by heating. The results of a test whereby the relationship between the above described values and durability in the rolling/sliding member was verified will be explained below.

Table 1 below shows specifications of example products according to this embodiment and comparative example products used for this verification test.

**Table. 1**

| | Ingredient (wt%) | | | | | Quenching temperature (°C) | Tempering temperature (°C) |
|---|---|---|---|---|---|---|---|
| | C | Si | Cr | Mn | Mo | | |
| Example product 1 | 1.02 | 1.48 | 2.01 | 0.45 | 0.42 | 860 | 280 |
| Example product 2 | 1.05 | 0.98 | 3.49 | 0.43 | 0.43 | 900 | 220 |
| Example product 3 | 0.98 | 1.53 | 3.52 | 0.46 | 0.42 | 880 | 220 |
| Example product 4 | 1.01 | 1.02 | 4.98 | 0.44 | 0.45 | 920 | 200 |
| Example product 5 | 0.99 | 1.49 | 4.99 | 0.45 | 0.42 | 940 | 220 |
| Example product 6 | 0.97 | 2.02 | 3.47 | 0.46 | 0.43 | 890 | 250 |
| Comparative Example product 1 | 0.99 | 0.98 | 1.86 | 0.43 | 0.44 | 860 | 250 |
| Comparative Example product 2 | 0.98 | 3.02 | 2.01 | 0.45 | 0.42 | 860 | 300 |
| Comparative Example product 3 | 1.01 | 0.25 | 1.46 | 0.44 | 0.43 | 840 | 200 |
| Comparative Example product 4 | 1.04 | 2.98 | 5.48 | 0.44 | 0.44 | 970 | 260 |

These example products (1 to 6) and comparative example products (1 to 4) were used for the verification test by using steel adjusted to the predetermined composition shown in Table 1, conducting quenching and tempering processes under the heat treatment conditions shown in Table 1, then applying shot peening treatment to the surface under the following conditions and thereby conducting surface hardening.

The conditions of the above described shot peening treatment are as follows:
(1) Model (scheme): Direct air compression scheme
(2) Shot particles: RCW06PU (φ0.6 mm) approximately 830 HV
(3) shot peening pressure: 0.49 MPa
(4) Number of revolutions of table (number of revolutions of sample): 12 rpm
(5) Nozzle diameter: φ6 mm
(6) Nozzle-sample distance: 100 mm
(7) Arc height: 0.64 mmA
(8) Coverage: 200% (target value)

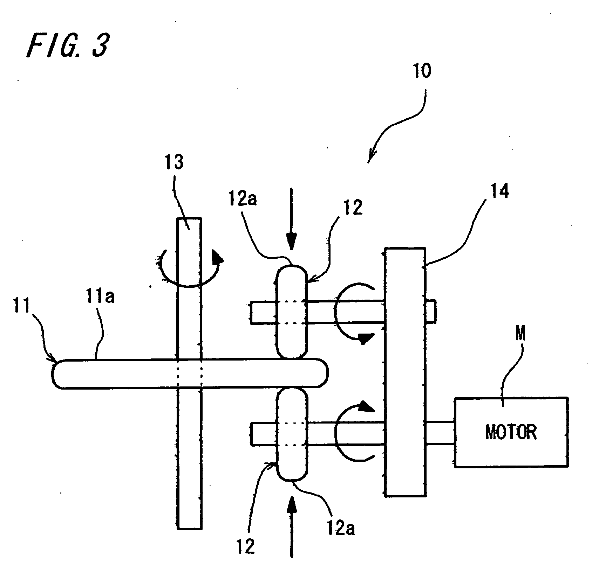

FIG. 3 is a schematic diagram of a durability tester used for this verification test. In FIG. 3, a durability tester 10 has a disk 11 arranged so as to be rotatable around an axis of rotation 13, a pair of rollers 12 which hold sides 11a of the disk 11 in the vertical direction with a predetermined load and a motor M which drives the pair of rollers 12 via a gear box 14 so that the rollers 12 synchronously rotate in mutually opposite directions. The disk 11 is constructed so as to be driven to rotate with the torque transmitted from the pair of rollers 12 driven by the motor M and it is possible to reproduce a condition similar to that of the actual apparatus of transmitting the torque between an end face 12a of the roller 12 and the side 11 a of the disk 11 and making rolling/sliding contact.

In this verification test, the above described example products and comparative example products were applied to the disk 11 of the durability tester 10, a time until rolling and sliding with the roller 12 produced breakage on the side 11a of the disk 11 was measured as useful life and durability of the disk 11 was evaluated based on the useful life.
The test conditions of the above described durability tester 10 were set as follows:
(1) Rotation speed of roller: 3000 rpm
(2) Slip ratio between roller and disk: 14%
(3) Maximum contact pressure: 4.2 GPa
(4) Lubricant: Traction oil for toroidal continuously variable transmission
(5) Oil film parameter (A): 1.8
Table 2 shows the results of the above described durability test.

**Table. 2**

| | After quenching/tempering | | After shot peening (after surface hardening) | | | | Useful life (h) |
|---|---|---|---|---|---|---|---|
| | Surface, hardness (HRC) | Amount of residual austenite (wt%) | Surface hardness (HRC) | Amount of residual austenite (wt%) | Amount of reduction of surface hardness after heating (HRC) | Maximum value of residual compression stress (MPa) | |
| Example product 1 | 61.2 | 12 | 62.7 | 7 | 0.6 | 950 | 900 |
| Example product 2 | 60.8 | 19 | 63 | 10 | 0.4 | 1090 | 1150 |
| Example product 3 | 60.9 | 13 | 63.6 | 5 | 0.3 | 1040 | 1020 |
| Example product 4 | 61.3 | 15 | 63 | 10 | 0.5 | 750 | 1200 |
| Example product 5 | 61.5 | 17 | 62.9 | 11 | 0.4 | 980 | 986 |
| Example product 6 | 61.3 | 14 | 63.5 | 5 | 0.3 | 1020 | 1080 |
| Comparative Example product 1 | 61 | 10 | 61.5 | 8 | 1.1 | 200 | 452 |
| Comparative Example product 2 | 61 | 11 | 62 | 7 | 0.5 | 500 | 420 |
| Comparative Example product 3 | 59 | 4 | 62.8 | 1 | 2.5 | 1320 | 300 |
| Comparative Example product 4 | 61 | 21 | 61 | 21 | 0.3 | 150 | 484 |

In addition to the useful life measured by the above described durability tester, Table 2 also shows the measurement results of surface hardness and amount of retained austenite after a quenching/tempering process, surface hardness and amount of retained austenite, compression residual stress on the surface and amount of reduction of surface hardness after heating for two hours at 300 °C after shot peening treatment of products according to different embodiments and comparative examples.

Table 2 shows the amount of reduction of surface hardness after heating as a difference in surface hardness before and after heating obtained by heating the respective example products and comparative example products which have been subjected to shot peening treatment to 300 °C, keeping those products in an atmospheric furnace or the like for two hours and then measuring surface hardness on the C scale of Rockwell hardness.
As is clear from Table 2, it is appreciated that the useful life in the verification test on the example products according to the present invention is approximately double that of the comparative products. From this result, it has been confirmed that the example products according to this embodiment have such high fatigue resistance to rolling and sliding that breakage like surface flaking is not produced for a long time and are provided with high durability.

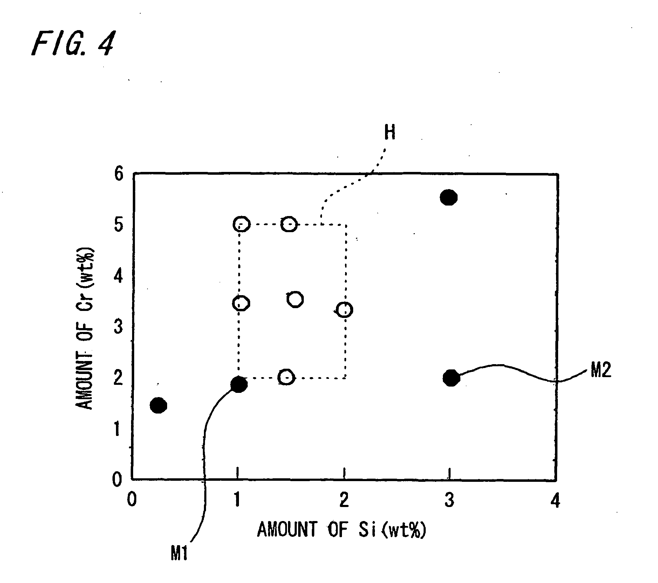

FIG. 4 is a graph showing a relationship between the amount of Si and the amount of Cr contained in steel of the respective example products and comparative example products. In FIG. 4, the horizontal axis shows a weight % value of Si in steel, the vertical axis shows a weight % value of Cr in steel, and the example products are plotted with white outline circles and the comparative example products are plotted with black solid circles.

In the Figure, in the case of the example products, the amount of Si in steel is set to 1 to 2 wt% and the amount of Cr is set to 2 to 5 wt%, and therefore they are plotted within the range shown by a dotted line H in the figure. On the other hand, in the case of the comparative example products, for example, with a circle M1 in the figure (comparative example product 1), the amount of Si is substantially 1 wt%, which satisfies the above described condition of the amount of Si but the amount of Cr is slightly lower than 2 wt%, which does not satisfy the above described condition of the amount of Cr.
Furthermore, with a circle M2 in the figure (comparative example product 2), the amount of Cr is substantially 2 wt%, which satisfies the above described condition of the amount of Cr, but the amount of Si is 3 wt%, which does not satisfy the condition of the amount of Si. In this way, it is understandable that the rolling/sliding member needs to satisfy conditions for both the amount of Si and the amount of Cr in steel.

As is evident from the above described results of the verification test, the rolling/sliding member of the present invention uses steel containing the above described predetermined contents of Si, Cr, achieves predetermined surface hardness through quenching/tempering, applies the above described surface compression residual stress, and can thereby keep surface hardness necessary for the rolling/sliding member even when the surface of the rolling/sliding member is heated with heat accompanying rolling and sliding and suppress generation of surface cracks caused by a reduction of surface hardness. In addition to the effect of improving fatigue resistance due to surface compression residual stress, it is also possible to more effectively increase fatigue resistance of the rolling/sliding member and achieve higher durability.

This result shows that the effects become conspicuous in a full toroidal continuously variable transmission whose contact part between the roller and the disk is accompanied by large amount of spin and which is put under difficult contact conditions.
That is, the toroidal continuously variable transmission according to this embodiment applies rolling/sliding members with enhanced fatigue resistance and higher durability, and can thereby further increase the durability.
Furthermore, according to the method of manufacturing the rolling/sliding member of the above described embodiment, not only using the heat-resistant bearing steel but also including the quenching/tempering process and the surface hardening process can effectively increase fatigue resistance and obtain rolling/sliding members with higher durability.

The rolling/sliding member of the present invention is not limited to the above described embodiment. For example, the above described embodiment applies the rolling/sliding member according to the present invention to all the input/output disks and rollers of the toroidal continuously variable transmission, but it is also possible to apply the rolling/sliding member of the present invention to only the input/output disks and combine them with rollers according to other specifications using, for example, SUJ2.
Furthermore, the above described embodiment has shown the full toroidal continuously variable transmission, but the present invention is also applicable to a toroidal continuously variable transmission in other modes such as a half toroidal type.

## Claims

1. A rolling/sliding member used for a toroidal continuously variable transmission,
wherein the rolling/sliding member is made of steel containing at least:
C: not less than 0.8 wt% and not more than 1.5 wt%,
Si: not less than 0.9 wt% and not more than 2.1 wt%,
Cr: not less than 2 wt% and not more than 5 wt%,
wherein by applying surface hardening through shot peening treatment to a surface whose surface hardness is set to not less than 60 HRC and not more than 64 HRC through quenching/tempering, surface compression residual stress thereof is set to not less than 700 MPa and not more than 1100 MPa, whereby the surface hardening through shot peening causes the amount of reduction of surface hardness when heated at 300 °C to be not more than 1 HRC, and
wherein the amount of retained austenite after quenching/tempering and before the surface hardening through shot peening treatment is not less than 10 wt% and not more than 20 wt%.

2. The rolling/sliding member according to claim 1,
wherein the austenitizing temperature is not less than 870°C and not more than 950 °C and the tempering temperature is not less than 200°C and not more than 280 °C.

3. A method of manufacturing a rolling/sliding member used for a toroidal continuously variable transmission, comprising the following steps:
- a quenching/tempering process of performing quenching/tempering on an intermediate material of the rolling/sliding member made of steel containing at least:
C: not less than 0.8 wt% and not more than 1.5 wt%,
Si: not less than 0.9 wt% and not more than 2.1 wt%,
Cr: not less than 2 wt% and not more than 5 wt%,
at an austenitizing temperature of not less than 870°C and not more than 950 °C and a tempering temperature of not less than 200°C and not more than 280 °C to thereby set the surface hardness of the intermediate material to not less than 60 HRC and not more than 64 HRC and the amount of retained austenite to not less than 10 wt% and not more than 20 wt%; and
- a surface hardening process of applying surface hardening through shot peening treatment to the intermediate material which has undergone the quenching/tempering process, thereby setting the surface compression residual stress of the intermediate material to not less than 700 MPa and not more than 1100 MPa and setting the amount of reduction of the surface hardness to not more than 1 HRC when heated at 300 °C.

4. A toroidal continuously variable transmission (1) comprising:
- an input disk (5) having a concave curved raceway surface (5b) on a side;
- an output disk (6b) having a concave curved raceway surface (6c) facing the raceway surface (5b) of the input disk (5) on a side; and
- rollers (7) which are sandwiched between raceway surfaces (5b, 6c) of the respective disks (5, 6b) in a rotatable manner and transmit torque between the respective disk (5, 6b) through rolling and sliding between the respective disks (5, 6b),
- wherein at least one of the input disk (5), the output disk (6b) and the rollers (7), which are rolling/sliding members, is the rolling/sliding member according to claim 1 or 2.

## Patentansprüche

1. Wälz-/Gleitelement zur Verwendung bei einem stufenlos einstellbaren Toroidgetriebe, wobei das Wälz-/Gleitelement aus Stahl hergestellt ist und zumindest folgendes enthält:
C: nicht weniger als 0,8 Gew.-% und nicht mehr als 1,5 Gew.-%,
Si: nicht weniger als 0,9 Gew.-% und nicht mehr als 2,1 Gew.-%,
Cr: nicht weniger als 2 Gew.-% und nicht mehr als 5 Gew.-%,
wobei durch Ausführen einer Oberflächenhärtung durch Kugelstrahlbehandlung an einer Oberfläche, deren Oberflächenhärte durch Abschrecken/Tempern auf nicht weniger als 60 HRC und nicht mehr als 64 HRC eingestellt ist, ihre Oberflächenkompressions-Restspannung auf nicht weniger als 700 MPa und nicht mehr als 1100 MPa eingestellt ist, wobei die Oberflächenhärtung durch Kugelstrahlen dazu führt, daß der Betrag der Reduzierung der Oberflächenhärte bei Erwärmung auf 300 °C nicht mehr als 1 HRC beträgt, und
wobei die Menge des Restaustenits nach dem Abschrecken/Tempern und vor der Oberflächenhärtung durch Kugelstrahlbehandlung nicht weniger als 10 Gew.-% und nicht mehr als 20 Gew.-% beträgt.

2. Wälz-/Gleitelement nach Anspruch 1,
wobei die Austenitisierungstemperatur nicht weniger als 870 °C und nicht mehr als 950 °C beträgt und die Temperatur zum Tempern nicht weniger als 200 °C und nicht mehr als 280 °C beträgt.

3. Verfahren zum Herstellen eines Wälz-/Gleitelements zur Verwendung für ein stufenlos einstellbares Toroidgetriebe,
wobei das Verfahren folgende Schritte aufweist:
- einen Abschreck-/Tempervorgang, bei dem das Abschrecken/Tempern an einem Zwischenmaterial des Wälz-/Gleitelements ausgeführt werden, das aus Stahl hergestellt ist und zumindest folgendes enthält:
C: nicht weniger als 0,8 Gew.-% und nicht mehr als 1,5 Gew.-%,
Si: nicht weniger als 0,9 Gew.-% und nicht mehr als 2,1 Gew.-%,
Cr: nicht weniger als 2 Gew.-% und nicht mehr als 5 Gew.-%,
bei einer Austenitisierungstemperatur von nicht weniger als 870 °C und nicht mehr als 950 °C sowie bei einer Temperatur zum Tempern von nicht weniger als 200 °C und nicht mehr als 280 °C, um dadurch die Oberflächenhärte des Zwischenmaterials auf nicht weniger als 60 HRC und nicht mehr als 64 HRC einzustellen und die Menge des Restaustenits auf nicht weniger als 10 Gew.-% und nicht mehr als 20 Gew.-% einzustellen; und
- einen Oberflächen-Härtungsvorgang, bei dem eine Oberflächenhärtung durch Kugelstrahlbehandlung an dem Zwischenmaterial ausgeführt wird, das dem Abschreck-/Tempervorgang unterzogen worden ist, um dadurch die Oberflächenkompressions-Restspannung des Zwischenmaterials auf nicht weniger als 700 MPa und nicht mehr als 1100 MPa einzustellen und den Betrag der Reduzierung der Oberflächenhärte bei Erwärmung auf 300 °C auf nicht mehr als 1 HRC einzustellen.

4. Stufenlos variables Toroid-Getriebe (1), das folgendes aufweist:
- eine Eingangsscheibe (5) mit einer konkav gekrümmten Lauffläche (5b) an einer Seite;
- eine Ausgangsscheibe (6b) mit einer konkav gekrümmten Lauffläche (6c), die der Lauffläche (5b) der Eingangsscheibe (5) an einer Seite zugewandt ist; und
- Wälzkörper (7), die sandwichartig zwischen den Laufflächen (5b, 6c) der jeweiligen Scheiben (5, 6b) drehbar eingeschlossen sind und ein Drehmoment zwischen den jeweiligen Scheiben (5, 6b) durch Wälz- und Gleitberührung zwischen den jeweiligen Scheiben (5, 6b) übertragen,
- wobei mindestens eine von der Eingangsscheibe (5), der Ausgangsscheibe (6b) und den Wälzkörpern (7), bei denen es sich um Wälz-/Gleitelemente handelt, ein Wälz-/Gleitelement gemäß Anspruch 1 oder 2 ist.

## Revendications

1. Elément roulant/glissant destiné à une transmission toroïdale à variation continue, l'élément roulant/glissant étant constitué d'un acier contenant au moins :
C : au minimum 0,8 % en poids et au maximum 1,5 % en poids,
Si : au minimum 0,9 % en poids et au maximum 2,1 % en poids,
Cr : au minimum 2 % en poids et au maximum 5 % en poids,
dans lequel, lors de l'application d'un traitement de durcissement de surface par grenaillage à une surface dont la dureté de surface est fixée au minimum à 60 HRC et au maximum à 64 HRC par trempe et revenu, la contrainte résiduelle de compression de surface de celle-ci est fixée au minimum à 700 MPa et au maximum à 1100 MPa,
- moyennant quoi le durcissement de la surface par grenaillage fait que le degré de diminution de la dureté de surface lorsque celle-ci est chauffée à 300 °C ne dépasse pas 1 HRC, et
- dans lequel la quantité d'austénite résiduelle après trempe et revenu et avant le traitement de durcissement de la surface par grenaillage est au minimum de 10 % en poids et au maximum de 20 % en poids.

2. Elément roulant/glissant selon la revendication 1,
dans lequel la température d'austénitisation est au minimum de 870 °C et au maximum de 950 °C et la température de revenu est au minimum de 200 °C et au maximum de 280 °C.

3. Procédé de fabrication d'un élément roulant/glissant destiné à une transmission toroïdale à variation continue, comprenant les étapes suivantes :
- un procédé de trempe et revenu qui consiste à effectuer une trempe et un revenu sur un matériau intermédiaire de l'élément roulant/glissant constitué d'un acier contenant au moins :
C : au minimum 0,8 % en poids et au maximum 1,5 % en poids,
Si : au minimum 0,9 % en poids et au maximum 2,1 % en poids,
Cr : au minimum 2 % en poids et au maximum 5 % en poids, à une température d'austénitisation d'au minimum 870 °C et d'au maximum 950 °C et à une température de revenu d'au minimum 200 °C et d'au maximum 280 °C afin de fixer la dureté de surface du matériau intermédiaire au minimum à 60 HRC et au maximum à 64 HRC et la quantité d'austénite résiduelle au minimum à 10 % en poids et au maximum à 20 % en poids ; et
- un procédé de durcissement de surface qui consiste à appliquer un traitement de durcissement de surface par grenaillage au matériau intermédiaire ayant été soumis au procédé de trempe et revenu, afin de fixer la contrainte résiduelle de compression de surface du matériau intermédiaire au minimum à 700 MPa et au maximum à 1100 MPa et de fixer le degré de diminution de la dureté de surface au maximum à 1 HRC lorsque celle-ci est chauffée à 300 °C.

4. Transmission toroïdale à variation continue (1) comprenant :
- un disque d'entrée (5) présentant une surface de roulement incurvée concave (5b) sur un côté ;
- un disque de sortie (6b) présentant une surface de roulement incurvée concave (6c) faisant face à la surface de roulement (5b) du disque d'entrée (5) sur un côté ; et
- des rouleaux (7) qui sont pris en sandwich entre les surfaces de roulement (5b, 6c) des disques respectifs (5, 6b) d'une manière rotative et transmettent un couple entre les disques respectifs (5, 6b) en roulant et glissant entre les disques respectifs (5, 6b),
- dans laquelle au moins un du disque d'entrée (5), du disque de sortie (6b) et des rouleaux (7), qui sont des éléments roulants/glissants, est l'élément roulant/glissant selon la revendication 1 ou 2.
